# EUROPEAN PATENT SPECIFICATION

(11) **EP 2 964 403 B1**
(45) Date of publication and mention of the grant of the patent: **24.04.2024**
(21) Application number: 14709891.7
(22) Date of filing: 20.02.2014
(51) Int. Cl.: B09C 1/02, A62D 3/02, B09B 3/00

(54) **USE OF ACIDOGENIC LEACHATE, METHOD AND PLANT FOR SOIL WASHING**
VERWENDUNG VON AZIDOGENEM SICKERWASSER, VERFAHREN UND ANLAGE ZUR BODENAUSWASCHUNG
UTILISATION DE LIXIVIAT ACIDOGÈNE, PROCÉDÉ ET INSTALLATION POUR LE LAVAGE DE SOL

(30) Priority: 08.03.2013 SE 1350284
(43) Date of publication of application: 13.01.2016
(73) Proprietor: Ragn-Sells Recycling AB, 191 29 Sollentuna (SE)
(72) Inventor: KIHL, Anders, SE-178-38 Ekerö (SE); LAGERKVIST, Anders, SE-975 93 Luleå (SE)
(74) Representative: Herbjørnsen, Rut
(86) International application number: PCT/EP2014/053357
(87) International publication number: WO 2014/135380

(56) References cited:
- WO-A2-03/022744
- JP-A- 2008 246 273
- JP-A- 2010 172 880
- US-A- 5 160 636
- US-A- 5 494 649
- US-A- 5 563 066
- calace n., liberatori a., petronio b.m., pietroletti m.: "characteristics of different molecular weight fractions of organic matter in landfill leachate and their role in soil sorption of heavy metals", 31 December 2000 (2000-12-31), elsevier enviro, XP002729805, page 331 - page 333

## Description

### Technical Field

The present invention relates to a use of acidogenic leachate according to claim 1. It also relates to a method of soil washing and a plant for soil washing.

### Background and Related Art

Traditionally arsenic, copper and chromium have been used as impregnating agents for wood. These are all toxic and discarded impregnated wood is considered hazardous waste. Other impregnating agents include creosote, which will leak polyaromatic hydrocarbons PAH into the environment. The manufacturing, use, or disposal, of impregnated wood is a source of contamination of the soil, which in some cases renders large areas unsafe for use for a long time.

In Sweden alone there are approximately 80 000 contaminated areas and arsenic is one of the most common problematic element in these areas. To enable the use of these areas contaminated soil has to be removed and usually treated before landfilling. Then virgin materials must be excavated for remediation of the contaminated site, which leads to high costs and stress on the environment. Soil washing is generally performed by sieving the soil to obtain the smallest particles, since the vast majority of the hazardous material is often bound to the smallest particles. These particles are then separated and removed. The remaining portion of the soil contains only a small fraction of the initial pollution, making the area safe for use again. This procedure results in three fractions of soil: one fraction is heavily contaminated and must be removed. A larger fraction is less heavily contaminated but must still be removed. The remaining fraction is substantially free of contaminants and may safely be put back on the same site. Hence, with this soil washing method a large fraction of the soil must be removed.

This is a quite expensive procedure, and also not effective for soil that consists predominantly of small particles, which will be contaminated to an equal degree. In this case there will be no fraction of the soil that is free of contaminants. This is the case, for example, near river banks. For example in the Scandinavian countries, a large part of the industries have traditionally been located near rivers, leaving polluted areas where the prior art method of soil washing is not very useful.

There are also experiments with soil washing by means of chemical agents. This soil can be put back on the same site if the treatment method is sufficiently effective to remove contaminants from the soil. For example, complex forming chemicals such as EDTA may be added to a liquid, which will then extract certain heavy metals from the soil. See Bossart, K.; Müller, R.; Schwermetallextraktion aus kontaminierten Böden mittels biologisch abbaubarer Chelatbildner; Diploma thesis, ETH Zürich, 2002. The liquids used are quite expensive to produce, which is an obstacle to large-scale use. Also, since EDTA does not degrade easily, the process may lead to emissions of complex formers to aquatic recipients.

WO 03/022744 A2 discloses a further known prior art.

There is therefore a need for a method for soil washing that enables the washing of any type of soil, including soil that consists predominantly of fine particles.

### Summary of the Invention

An aspect of the invention therefore relates to the use of acidogenic leachate to wash soil, said acidogenic leachate being obtainable by incomplete decomposition of organic waste under anaerobic conditions, said use including complex forming between fatty acid molecules in the acidogenic leachate and pollutants in the soil, resulting in a contaminated leachate. In this document the term acidogenic leachate will be used for leachate that is produced by decomposing organic waste under anaerobic conditions, as will be discussed below. Such acidogenic leachate is effective for removing contaminants such as metal cations and PAH from contaminated soil. The acidogenic leachate can be obtained, for example, by allowing organic material to react with a liquid under anaerobic conditions. The liquid may be water or a leachate, or another suitable liquid. After use, the contaminated leachate can be separated from the soil.

For reasons to be discussed in the following, a liquid to be used for soil washing should have a low pH value and a low redox potential and also one or more components that will form complexes binding metal ions. An acidogenic leachate of the type used in the invention fulfills all these criteria.

A low pH combined with low redox potential will increase the As(III)/As(V) ratio leading to greater arsenic release from soil as shown in Bowell R.J. (1994): Sorption of arsenic by iron oxides and oxyhydroxides in soils, Applied Geochemistry, vol. 9, pp. 279-286

Acid solutions similar to the type used according to the invention can be produced by adding an acid such as sulfuric acid and a complex forming substance such as EDTA to water. This method is costly and normally results in a solution that is not economically feasible for soil washing.

According to the invention therefore, preferably acidogenic leachate is used. Acidogenic leachate is typically the result of an incomplete anaerobic decomposition of organic waste with the aid of hydrolyzing and fermenting microorganisms, leading to an accumulation of organic acids and alcohols in solution. Such bacteria may be naturally present in the organic waste or added to it to facilitate the acidogenic reaction. Such anaerobic decomposition occurs spontaneously when organic materials are exposed to water in the absence of oxygen and other oxidizing agents and is often referred to as incomplete anaerobic decomposition, since the decomposition is halted at the acidogenic state rather than continuing to produce methane, carbon dioxide and water. The resulting solution is virtually cost free and extremely well suitable for soil washing. The organic waste used to produce the acidogenic leachate may be different types of ordinary household waste, such as food waste, or any other type of organic material, including sewage sludge, manure, or industrial waste such as wood waste or forest residues.

The function of the acidogenic leachate is threefold:
Arsenic occurs naturally in an equilibrium between As^{V} and As^{III}. Acidogenic leachate provides an environment with low redox potential, which results in reduction of As^{V} to As^{III} in the contaminated soil. Hence, the fraction of As^{III} in the soil increases in comparison to As^{V}. As^{III} is more unstable and soluble in water than As^{V} which results in higher mobility and extraction of As from the solid phase in the presence of acidogenic leachate. Moreover, the low pH of acidogenic leachate results in desorption of As from positively charged solid surfaces. Also many pollutants complexed and absorbed to ferric compounds will be mobilized as the iron is reduced to ferro iron and the aggregates dissolve.

As^{V} is typically bound to other ions, such as Fe ions, whereas As^{III} is generally much more soluble in water. Reducing As^{V} to As^{III} is advantageous because As^{III} more readily than As^{V} forms complexes with complex forming organic components in the leachate. The complexes thus formed may be separated from the soil in subsequent steps.

The acidogenic leachate also provides an acidic environment that helps reduce the valence of the arsenic ions, which makes it more soluble and helps the forming of complexes.

The acidogenic leachate also comprises a large portion of organic complex forming compounds, which will bind the ions that are to be washed out. The leachate is also effective for binding other types of contaminants which form strong complexes with large organic molecules such as fulvic acids. Other such contaminants include PAH, dioxins and metal ions, such as mercury. Hence, a liquid to be used for soil washing should preferably hold a low pH value and a low redox potential and also one or more components that will form complexes binding metal ions.

The invention also relates to plant for soil washing comprising a washing container for exposing contaminated soil to acidogenic leachate to produce washed soil and contaminated leachate, a washing container comprising acidogenic leachate obtained by the decomposition of organic waste under anaerobic conditions, said acidogenic leachate including fatty acid molecules that will form complexes with pollutants in the soil, liquid providing means arranged to provide acidogenic leachate to the washing container and first separating means arranged to separate the contaminated acidogenic leachate from the washed soil.

The invention also relates to a method for soil washing comprising the following steps:
- Exposing contaminated soil to acidogenic leachate for a first period of time of preferably 1 to 48 hours, to produce a suspension of leachate and washed soil, whereby fatty acids in the acidogenic leachate form complexes with contaminants in the soil, resulting in a contaminated leachate, and
- Separating the soil from the contaminated leachate to produce washed soil.

Hence, according to this method, adsorbed pollutants are brought into solution and allowed to react with fatty acids and possibly other complex formers, which will result in a contaminated leachate.

Preferably the method further comprises the step of rinsing the washed soil to remove any contaminated leachate kept within the soil. This may be done using a rinsing liquid and/or vacuum filtering to produce clean soil. If rinsing liquid is used the result of this step is rinsed soil and contaminated rinsing liquid.

In embodiments of the invention the plant further comprises a rinsing container for performing the rinsing step, and second separating means arranged to separate the rinsed soil from the contaminated rinsing liquid. The rinsing container may be the same container as the washing container or may be a separate container. If the rinsing container is a second container, the first separating means preferably includes first transporting means for transporting washed soil from the washing container to the rinsing container. It would also be possible to transport the washed soil, and the rinsed soil using external means, such as an excavator.

The first and/or second separation means may include a tap for releasing the contaminated leachate and/or the contaminated rinsing liquid, respectively. Alternatively, or in addition, the first and/or second separation means includes a mechanism, such as a transport line or a feed screw, for lifting the washed and/or rinsed soil from the washing and/or rinsing container to a next container. Sedimentation steps may also be used in the separation, by allowing the washed soil, or the rinsed soil, as the case may be, to settle at the bottom of the container before removing the contaminated leachate or rinsing liquid, respectively.

The plant may further comprise a soil container for receiving rinsed soil from the rinsing container.

The soil may be exposed to acidogenic leachate that has been produced previously. Alternatively, the soil washing may be performed in parallel with the production of the acidogenic leachate. In the latter case the organic material that is to decompose is mixed with the soil in the washing container and water is added to enable the forming of acidogenic leachate by decomposition of the organic material. After the decomposition of the organic material the washed soil can be separated from the contaminated leachate in any suitable way. The washed soil and the contaminated leachate may then be treated as outlined above.

The plant outlined above can be made so that it comprises only parts that are mobile between sites where there is contaminated soil to be washed. For example, one or more of the washing, rinsing and soil containers may be adapted for transporting by one or more trucks depending on their size and weight. Or standard containers for transporting may be used, and possibly modified, for example, by the inclusion of liquid outlets. The method and plant discussed above are therefore particularly suitable for soil washing on site, that is, without moving the soil to another place to be washed. Also, since all the soil can be rendered free of contaminants, no soil has to be removed from the site after washing. In this case the method may further comprise the step of transporting one or more of the containers to the site where the contaminated soil is located, wherein the method is performed near the location of the contaminated soil.

The acidogenic leachate may have been produced on site or somewhere else, by decomposing organic material in an anaerobic environment and adding water or another suitable liquid, for use in the method. With the chemical treatment according to the invention, a compact plant for soil washing can be achieved. Preferably the soil can be washed on site, without the need for long transports. Preferable embodiments of the washing method and plant allow the plant to be mobile between different sites where soil washing is needed.

Preferably the method comprises the additional step of purifying the contaminated leachate and if applicable rinsing liquid that has been used for washing the soil. This can be achieved by completing the anaerobic degradation chain to methane generation, where most of the organic compounds in solution will degrade to water, carbon dioxide and methane. By doing so pH will rise to about neutral conditions and organic complex formers will be consumed. This in combination with the formation of uncharged complexes of hydroxides and sulfides will lead to a separation and concentration of metals and arsenic in a small volume sludge phase while most of the organics will end up in gas phase.

As mentioned above, the term acidogenic leachate in this document means the leachate produced in the acidogenic phase of the decomposition of organic waste, which occurs after the aerobic phase and before the methanogenic phase like in the landfill.

Under acidogenic degradation conditions, organic material is mainly degraded to the following end products: volatile fatty acids, alcohols, carbon dioxide and hydrogen gas. These degradation products are to a large extent soluble in water causing high loads of organic material in the formed leachates. The fatty acids will, by a lowering of leachate pH and by their capability of forming metal complexes, increase the mobility of many metals.

### Brief Description of the Drawings

The invention will be described in more detail in the following, with reference to the drawings, in which
Figure 1 discloses a prior art plant for soil washing which may be used for implementing the invention.
Figure 2 discloses a plant for soil washing which may be used for implementing the invention according to a first, simplified embodiment.
Figure 3 is a flow chart outlining a first possible method for soil washing using the plant of Figure 1 or Figure 2.
Figure 4 discloses a second embodiment of a plant for soil washing which may be used for implementing the invention.
Figure 5 is a flow chart outlining a first possible method for soil washing using the plant of Figure 3.
Figure 6 shows a third embodiment of a plant for soil washing which may be used for implementing the invention.
Figure 7 illustrates an overall process according to embodiments of the invention.
Figure 8 illustrates an alternative start of the processes shown in Figures 3 and 5.
Figure 9 illustrates a modification to the overall process of Figure 7, corresponding to the alternative shown in Figure 8.

### Detailed Description of Embodiments

The leachate to be used in the process according to embodiments of the invention may be obtained by a process in which organic waste is allowed to decompose in an oxygen-free environment with hydrolyzing and fermenting microorganisms, such as lactic acid bacteria.

Such lactic acid bacteria may be naturally present in the organic waste or actively added to it. When water is added, a solution with a low pH is obtained. This solution, or leachate, is an acidogenic leachate comprising volatile fatty acids VFA, and fulvic acids. These VFAs and fulvic acid are macromolecules that bind various types of contaminants by forming strong complexes. As explained above, the properties of this acidogenic leachate make it particularly suitable for washing contaminated soil.

The essential requirement for washing the soil is that the contaminated soil be exposed to the acidogenic leachate for a suitable period of time for the contaminants to be extracted from the contaminated soil. The result is washed soil and acidogenic leachate comprising complexes holding the contaminants. Preferably, thereafter, the washed soil is rinsed by a rinsing liquid, which may be pure water. Other liquids are perceivable, for example ethanol or another alcohol, but water is probably the most cost-efficient. It may also be feasible to use a liquid that can help restore the pH value after treatment with the acidogenic leachate. For example, the rinsing liquid may contain alcalic compounds, serving to increase the pH value. The result of the rinsing process is clean soil and contaminated water holding the remainder of the complexes holding the contaminants.

The clean soil may be spread in the environment again. The contaminated leachate and rinsing liquid is preferably purified. The preferred way of purifying the leachate is to use an anaerobic bioreactor where the organic content is degraded by microorganisms, resulting in biogas (methane and carbon dioxide). When the complex-forming agents in the contaminated leachate are broken down the solubility of the elements of concern, that is, arsenic, zinc, lead, copper, chromium, cadmium etc will decrease and they will precipitate from the water. This process therefore contributes to cleaning the water. The precipitation may be enhanced by adding sulphur to the leachate before the bioreactor. The addition of sulphur will cause many elements of concern to precipitate as sulphides in the bioreactor. The same process is observed at municipal solid waste landfills where complexation of metals with S in form of sulfides occurs under methanogenic phase, under anaerobic conditions and with a low redox. This makes metals less soluble in water and hence it results in reduced leaching of metals. The bioreactor may therefore be seen as a landfill where organic waste is landfilled and where biogas is extracted. Organic contaminants in the contaminated leachate such as PAH will stay in the bioreactor when the complexing agents are degraded. Some organic contaminants may be degraded in the bioreactor. Both the leachate and the rinsing water will probably need treatment, depending on the amount of contaminants such as PAH. Known methods of removing PAH from water include filtering, for example with activated carbon, or degradation of PAH with ozone. Such methods exist in the prior art and are not part of the invention.

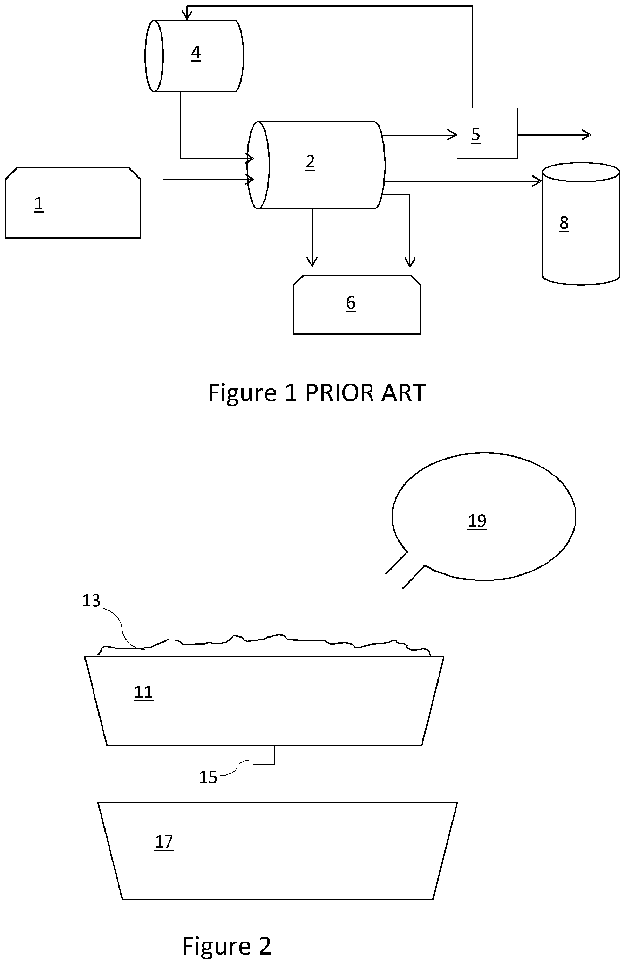

Figure 1 shows a prior art soil washing plant in which the inventive method may be implemented. A pile 1 of excavated soil to be washed is shown. The soil 1 is provided to a washing tank 2, for example by means of an excavator, wheel loader, or the like (not shown). According to the prior art a liquid tank is 4 arranged to hold washing liquid comprising water and detergents. After separation of the soil from the liquid, the result is a pile 6 of washed soil which may be treated further as will be discussed below. A waste tank 8 is arranged to receive any soil that is still too contaminated to return to the site, according to the prior art methods. The contaminated liquid may be transported to a water treatment plant 5, from which the clean water can be reused in the washing tank 2, or discharged.

In the context of the invention the liquid tank 4 may be instead by used to provide the acidogenic leachate to the washing tank 2. After exposing the soil to the acidogenic leachate in the washing tank 2 for a suitable amount of time, the soil may be separated from the leachate, which is now contaminated. In this case, all the soil should be clean enough to be returned to the site, possibly after rinsing. Preferably the contaminated leachate is treated in ways that will be discussed in the following,

Another possible embodiment of a plant for soil washing is illustrated in Figure 2, which shows a soil washing plant containing a large open first container 11 holding an amount of soil 13. At the bottom of the container there is a tap 15 for letting out liquid. Underneath the tap there is a second container 17. In use, the soil 13 to be washed is placed in the first container 11 and acidogenic leachate is added to the first container 11 so that all the soil is exposed to the leachate. The leachate is held in a large sack 19 or other suitable container. When the leachate has reacted with the soil for a suitable time for binding as much as possible of the arsenic, and/or other contaminants found in the soil to the complex forming molecules, the leachate can be removed from the first container 11 through the tap 15. Thereafter, a rinsing liquid is added to rinse the soil in the first container.

To make the reactions more efficient it will be feasible to cause the soil and leachate to form a suspension. In that case a mixer may be used to stir the suspension to reduce treatment time. If a suspension is made a sedimentation step may be included to allow the solids to settle.

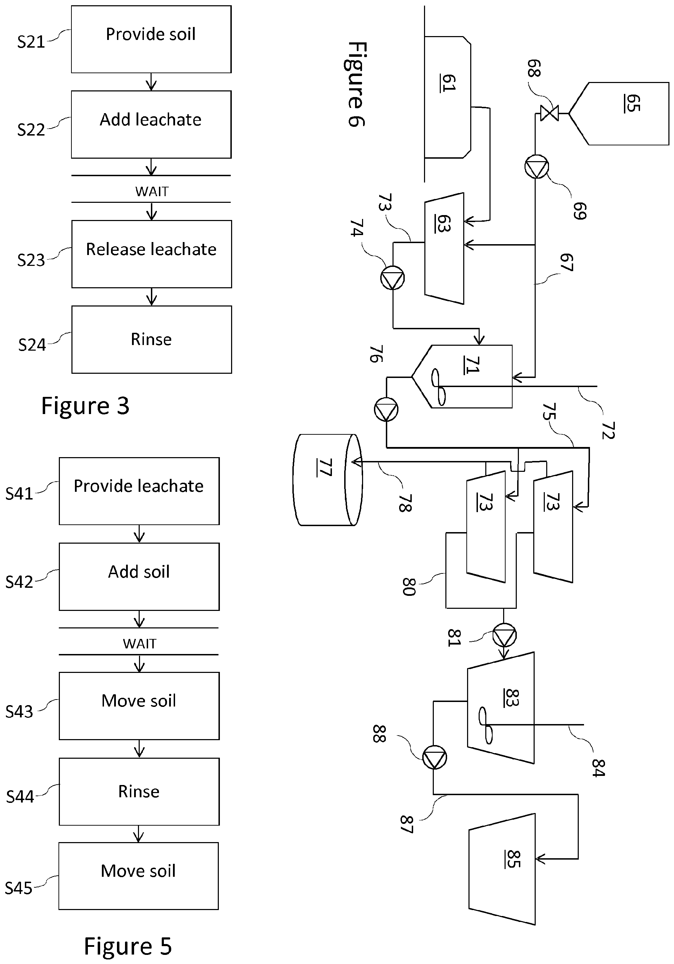

The method is illustrated in the flow chart of Figure 3, described here with reference to Figure 2.

In step S21 soil that is to be washed is placed in the first container 11.

In step S22 acidogenic leachate is added to the first container 11 and the reactor is closed.

Preferably the reactor should be tightly closed to secure anaerobic conditions and to trap the methane that is formed in the reaction between the contaminated soil and the leachate.

It would of course be possible to reverse the order of steps S21 and S22, or to introduce leachate and soil at the same time.

After a suitable reaction time, in step S23, the acidogenic leachate, now holding the contaminants, as described above, is released through the tap 15 into the second container 17. The reaction time depends on the nature and quality of the leachate, and the amounts and types of contaminants.

In step S24, a rinsing liquid, for example, pure water is added to the soil and released through the tap 15 into the second container 17, possibly after a period of time. Step S24, and if desired steps S23 and S24, may be repeated as needed.

When the soil is clean, it can be removed from the first container 11, for example, by tipping the container, and returned to the site from where it was taken, or to another place.

The second container 17 now holds a contaminated fluid which is a mixture of acidogenic leachate and the water used to rinse the soil. This contaminated fluid may be treated in subsequent steps, by any known method suitable for the contaminations present. This is normally achieved by adding one or more agents that are suitable for binding the respective contaminants to the contaminated fluid. In the case of arsenic and some other metals, a suitable agent is sulphur. The result of adding sulfur to the liquid under anaerobic conditions, with the assistance of bacteria using substrates such as carbon dioxide, methyl and the acetatotrophic substrate, is that the arsenic reacts with the sulfur to form arsenic sulfide, AsS, whereas the hydrocarbons are split to form methane, which may be used as a source of energy, and carbon dioxide. In the embodiments shown in Figures 1 and 3, this is typically done in the liquid collecting container.

Preferably, in a preceding step S21, the leachate can be produced on site as well, in a reactor tank, large bag, or the like, suitable for producing acidogenic leachate as outlined above. This may be the container 19 used to add the leachate to the first container 1.

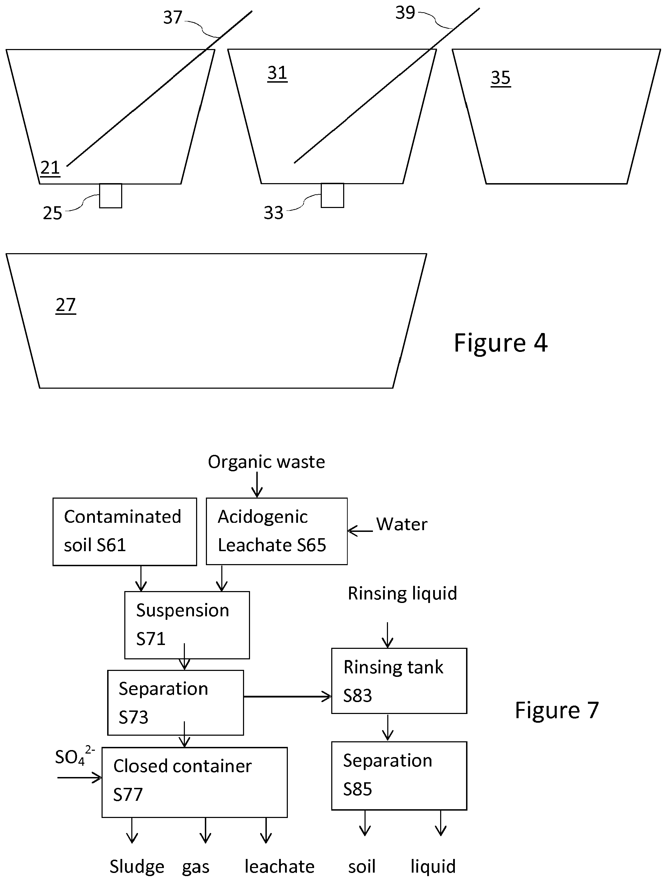

A second embodiment of a plant for soil washing is shown in Figure 4. A method for use with this embodiment is outlined in Figure 5.

The plant of Figure 4 includes a first container 21 in which soil is mixed with acidogenic leachate to be washed. The first container 21 preferably has a lid (not shown) for closing it tight while the soil and leachate are reacting and a tap 25 at or near the bottom for releasing liquid into a second container 27 arranged to hold contaminated liquid. A third container 31 is arranged to receive the washed soil from the first container 21. In the third container 31 the washed soil is cleansed with water or another suitable rinsing liquid. The third container 31 also has a tap 33 for releasing contaminated rinsing liquid into the second container 27 or into a different container (not shown).

There is also a fourth container 35 for receiving the clean soil from the third container 31. First transport means 37 are arranged for transporting the washed soil from the first container 21 to the third container 31 and second transport means 39 are arranged for transporting the clean soil from the third container to 31 the fourth container 35. The first 37 and second 39 transporting means may be, for example, transport lines or feed screws arranged to lift the soil from the one container to a point above the next container and release it into the next container. It would also be possible to use a machine, such as an excavator, for moving the soil, provided it could be done in such a way as to leave a major part of the leachate in the first container.

In the first and third container the soil might be stirred to increase the contact between the soil and the acidogenic leachate, or rinsing liquid, respectively. This may be achieved by first and second stirring means 22, 32 in the first 21 and third 31 container, respectively, or in some other way. If feed screws are arranged in the containers, the contents of the container could be stirred by running the feed screws backwards.

A similar type of transporting means as the first and second transporting means 37, 39 may be arranged for transporting the clean soil from the fourth container 35, although this is not shown. Alternatively, the fourth container 35 may be arranged to be tilted to release the clean soil. As mentioned before, each of the containers 21, 27, 31, 35 is preferably arranged to be mobile, so that the fourth container 35 may be moved to the place where the clean soil should be applied and emptied there.

Figure 5 is a flow chart illustrating a method that may be used with the plant of Figure 4.

In step S41 a suitable amount of acidogenic leachate is introduced into the first container 21 and in step S42 a suitable amount of soil to be washed is introduced into the first container 21. This order could be reversed; either soil or leachate may be introduced first, or both at the same time.

After a suitable amount of time, sufficient for the contaminating particles to react with the leachate, the cleaned soil is transported in step S43 to the third container 31 by means of the first transporting means 37. In the third container 31 the washed soil is cleansed in step S44 using another type of rinsing liquid, preferably pure water, which may be introduced into the third container before, after or at the same time as the washed soil. The soil is kept in the fourth container 35 for a suitable amount of time. The clean soil is then, in step S45, transported from the third container 31 to the fourth container 35, or alternatively directly to the ground where it is to be placed.

The contaminated leachate from the first container 21 and the contaminated rinsing liquid from the third container 31 are released into the second container 27 for further treatment. The contaminated liquid in the second container 27 may be treated in substantially the same way as discussed in connection with Figure 2. The contaminated liquid in all embodiments will probably comprise a fraction of the finest soil particles. In this case the liquid may be kept in the second container 27 for a long enough time to allow the soil particles to settle at the bottom, so that the contaminated leachate and the sludge resulting from the sedimentation can be managed separately. The leachate should be transported to a water treatment plant and the sludge, which will also be probably contaminated, should be transported to a landfill.

As with the method shown in Figure 3, there may preferably be a preceding step in which the acidogenic leachate is produced on site. The content of the first and third containers are preferably stirred to increase the exposure of the soil to the respective liquid in each container.

As an alternative to releasing the leachate and rinsing liquid through a tap 25, 33 at the bottom of the first and third containers, respectively, the entire content of the respective container, including soil and liquid may be tipped into a sieve above another container, so that the soil will be kept in the sieve and the contaminated liquid will be collected in the other container.

In a preferred embodiment the plant used for soil washing according to the invention is mobile. This can be achieved with both the embodiment shown in Figure 1 and the embodiment shown in Figure 3.

Preferably, the soil washing process is followed by a process of purifying the contaminated leachate and/or rinsing liquid, as discussed above in connection with figure 3.

Figure 6 is an overview of another embodiment of a soil washing plant according to the invention. As the skilled person will realize, elements of this embodiment can be combined with elements of previous embodiments. For example, in this embodiment pipelines are used for transporting liquid and soil between all containers, whereas in previous embodiments, various types of lifting arrangements have been used for the soil and the liquids have been released from the containers through taps in the containers. It would be possible to use pipelines and pumps between some containers and lifting mechanisms between others.

Figure 6 shows a pile of soil 61 that is to be washed. The soil has been excavated, normally from somewhere nearby. The soil 61 is provided to a reception tank 63, for example by means of an excavator, wheel loader, or the like (not shown). A leachate tank is 65 arranged to hold the acidogenic leachate to be used for soil washing. The leachate may be produced in the tank, or may be produced elsewhere and provided to the tank. In the former case, organic waste and water are provided to the leachate tank 65 and allowed to reach for a period of time to provide the acidogenic leachate. From the leachate tank a leachate pipeline 67 is arranged to provide leachate to a reception tank 65. To control the flow of leachate a valve 68 and optionally a pump 69 are provided in the leachate pipeline 67.

A mixing container 71, corresponding in function to the first container of Figure 3, is arranged to receive a mixture of soil and leachate from the reception tank 63 through a mixture pipeline 73. A pump 74 is arranged in the mixture pipeline 73 for pumping the mixture from the reception tank 63 to the mixing container 71. In the mixing container 71 more leachate is provided from the leachate tank 65 through a branch of the leachate pipeline 67. As will be understood, the reception tank is optional but may, when present, serve to facilitate the mixing of soil and leachate. It would be possible to provide soil and leachate from the pile 61 and the leachate tank 65 directly to the mixing tank 71. In the mixing tank 71 the mixture of soil and leachate is preferably stirred continuously or at intervals, to maximize the exposure of the soil to the leachate. Special mixing means 72 may be provided in the mixing tank 71, or the mixing may be performed by means of the excavator or some other means. The mixture is kept in the mixing tank 71 for a suitable amount of time, which may be in the range of one or a few hours.

From the mixing tank 71 the mixture is fed to one or more sedimentation tanks 73 through a pipeline 75 having a pump 76. In the sedimentation tank or tanks 73 the washed soil is allowed to sink to the bottom and the leachate is released into a leachate treatment tank 77 through a pipeline 78. An outlet for the leachate can be arranged in the container based on the level of sludge in the sedimentation tank. If possible, leachate can be released by free fall, otherwise it may be removed actively, for example, by means of a pump. The remaining soil in the sedimentation tank 73 will still be soaked with contaminated leachate, which must be removed from the soil. From the sedimentation tank 73 the soil is therefore transported through a soil pipeline 80 by means of a pump 81 to a rinsing tank 83. In the rinsing tank a rinsing liquid is added, to replace the leachate in the crevices in the soil. As discussed above, the rinsing liquid may be water, alcohol, or another suitable liquid. It may be feasible to make the liquid slightly alcalic to restore the pH value of the soil after being exposed to acidogenic leachate. This can be achieved, for example, by adding calcium to water. In the same way as in the mixing tank, it is advantageous to stir the content in the rinsing tank, in order to make the rinsing process more efficient. This may be achieved by special mixing means 84 or by some other suitable means.

From the rinsing tank 83 the rinsed soil is transported to a final tank 85 through a pipeline 87 comprising a pump 88. The final tank 85 is preferably a sedimentation tank where the soil is allowed to settle and excess rinsing fluid is removed. The rinsing fluid is typically transported to a water treatment plant (not shown). It may be exposed to treatment such as filtering or sedimentation on the way there and/or in the treatment plant itself. The remaining soil in the final tank 85 may be transported to a landfill or to be reused somewhere.

An alternative to rinsing the washed soil in the rinsing tank 83 would be vacuum filtering of the soil. This would extract the water from the pores and crevices in the soil resulting in a more compact soil.

The mixing tank 71 and the sedimentation tanks 73 together with the pipeline between them are used for the same purpose as the first container in Figures 2 and 4. The rinsing tank is used for the same purpose as the third container in Figure 4. As the skilled person will realize, elements of the different plants may be combined as long as all the functions are performed.

The leachate treatment tank may be used in the same way as the second container 27 of Figure 2 or 3.

Another option for leachate treatment would be to recirculate it to a landfill. In many countries, including Sweden, depositing liquid in this way is currently prohibited. But if permitted, the landfill would in this case function as a type of reactor. The landfill normally contains sufficient levels of sulfur for to initiate the same reactions as described above without any addition of sulfur: arsenic and other heavy metal ions would precipitate in the form of sulfides and be appropriately stored in the landfill without any need for further transportation. If not, obviously, sulfur may be added. The bacteria needed to promote this reaction are already present in the landfill and feed on the content of the leachate. This would therefore be a cost-efficient way of handling the leachate.

Figure 7 illustrates the overall process of soil washing according to an embodiment of the invention. To begin with, contaminated soil is stored in a deposit in step S61 and acidogenic leachate is stored in a leachate tank in step S65. The leachate may be produced in the leachate tank 65 by mixing organic waste and water and allowing it to react for a period of time. Instead of water, another fluid, such as leachate from a landfill area may be used for producing the leachate in this and all other embodiments. Soil and leachate are provided to a mixing container 71 and mixed to a suspension in a step S71. As discussed above the mixing container 71 is preferably closed to provide anaerobic conditions.

The same types of reactions as described above will occur in the mixing container 71. After a suitable amount of time, allowing as much of the contaminating ions as possible to react with the complex formers in the leachate, the soil is separated from the leachate in step S73. As shown above, this may be achieved in different ways, including sedimentation of the soil in a sedimentation tank 73, lifting of the soil out of the mixing tank as shown in Figure 3, and sieving of the soil. After the separation step S73 the soil is rinsed in a rinsing step S83 and the leachate is managed in step S77. Normally rinsing step S83 is performed by means of a rinsing liquid as discussed above, but it can also be done by extracting the contaminated leachate by means of vacuum filtering, or by a combination of these two methods. As shown in figure 2, the soil may be kept in the mixing tank 71 for this, but the process can be run more efficiently by moving the soil to a separate rinsing tank 83 allowing the washing of new soil in the mixing tank 71. In step S85 the soil is separated from the rinsing liquid. Again this may be done in different ways, as discussed for step S73. The rinsed soil may be deposited in a landfill or may be placed on the ground as fresh soil. The rinsing liquid after step S85 is transported to a water treatment plant.

In step S77 the contaminated leachate is treated, preferably in a closed container 77, by the addition of sulfide and/or other suitable reactants to the leachate. As explained above, this will lead to precipitation of the heavy metal ions. In this reaction, gases such as carbon dioxide and methane will also be released. Typically the leachate also contains dissolved soil particles. After a sedimentation step the leachate can be transported to the water treatment plant and the sedimented sludge can be transported to the landfill.

Instead of producing the leachate separately and adding it to the washing container, the leachate may be produced in the washing container itself. It is preferable in this case to mix the soil and the organic material, for example by means of a soil mixer, or simply by depositing alternating layers of soil and organic material in the washing container. The decomposition of the organic material would lead to the forming of acidogenic leachate which would start the soil washing process while the acidogenic leachate was being produced.

This could be performed in any of the plants suitable for the method, for example, the plants illustrated in Figures 1, 2, 4, or 6. The leachate tanks 4, 19, 65 shown in Figures 1, 4 and 6, respectively, could be excluded, or could be used as water tanks to provide water to the washing tank instead of leachate. Again, the washing tanks are preferably closed to facilitate anaerobic conditions.

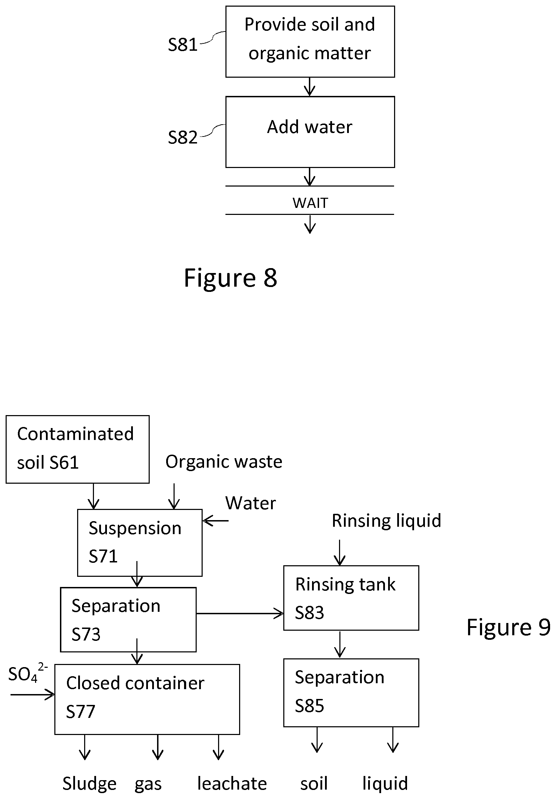

Figure 8 is a flow chart illustrating the first steps of this alternative method, corresponding to steps S21 and S22 or S41 and S42, of Figures 3 and 5, respectively:

In step S81 soil and organic matter are added to the washing container. Preferably they are also mixed, to increase the contact between the decomposing organic matter and the soil, to make the washing procedure as efficient as possible in parallel with the decomposition. They may be mixed in any suitable way, for example by means of a soil mixer or simply by adding alternating layers of soil and organic material in the washing container.

In step S82 water is added to facilitate the production of the acidogenic leachate. Of course, water may be added at any point in the process, before or after the addition of soil and organic matter, or at the same time.

After a suitable amount of time, sufficient for the leachate to form and for the contaminating particles to react with the leachate, the process continues with the separation of washed soil from contaminated leachate, for example according to steps S23 and S24 or steps S43 - S45.

Figure 9 shows a process overview similar to the one shown in Figure 7, adapted for this alternative process. As can be seen, the only difference is that the organic waste and the water are delivered directly to the mixing container, as is the contaminated soil. A mixer ensures that the organic matter, soil and water are mixed to a suspension. Hence, the soil is washed in the mixing chamber in parallel with the production of the acidogenic leachate.

The acidogenic leachate can be produced from a number of different sources of organic material, including food waste, bread, vegetables, fuel fraction, paper mill sludge, or manure such as horse manure. Mixtures of organic material have also been used, including a mixture of paper mill sludge and food waste, and a mixture of horse manure and fuel fraction. In experiments acidogenic leachate has been found to be several times more effective in washing off ions such as arsenic, copper and zinc, compared to soil washing with distilled water.

In the following, results from some such experiments will be presented. It should be noted that these data are based on a limited number of experiments. They should not be interpreted as limiting the scope of the invention in any way, but merely serve to illustrate some working examples of the inventive idea. In each case a liquid-to-solid ratio (L/S) of 2 was used for soil washing, that is, an amount of soil was mixed with twice the amount of leachate and allowed to react for a period of time.

Table 1 below shows the amounts of ions of Al, As, Ca, Cu Fe, K, Mg, Na, P, S and Zn washed out of As polluted soil by leachate produced from mixed food waste, bread, vegetables, respectively. Acidogenic leachate has also been found to wash out mercury from soil, although this is not reflected in table 1.

**Table 1 amounts of ions washed out by different types of leachate, and distilled water in mg per kg of soil.**

| | Mixed food waste | Bread | Vegetables | Distill water |
|---|---|---|---|---|
| Al | 23.2 | 110.24 | 28.16 | No data |
| As | 148.6 | 271.16 | 192.73 | 25.42 |
| Ca | 3831.7 | 989.29 | 839.04 | No data |
| Cu | 8.9 | 29.54 | 12.33 | 0.22 |
| Fe | 6.6 | 166.75 | 25.97 | No data |
| K | 1495.2 | 446.06 | 923.28 | No data |
| Mg | 580.4 | 178.32 | 140.94 | No data |
| Na | 1443.1 | 1000.48 | 121.64 | No data |
| P | 48.9 | 182.7 | 68.1 | No data |
| S | 528.1 | 97.77 | 146.29 | No data |
| Zn | 169.7 | 642.26 | 339.44 | 0.77 |

As can be seen, all the different types of acidogenic leachate turned out to be more effective than water, the actual results varying for different types of ions. In these experiments the reaction time for producing the acidogenic leachate was nearly two months starting from organic waste. The amount of water added to the substrate was approximately twice the amount of dry substance in the organic waste. The time allowed for soil washing was 24 hours.

The time needed for producing the acidogenic leachate naturally depends on various factors, including
- the type of waste used, in particular how easily degradable it is
- the amount of water added to the waste
- the temperature
- the amount of acid-forming bacteria
- the types of acid-forming bacteria

For example food waste will be more easily degradable than paper mill sludge, fuel fraction somewhere between the two.

The time needed for soil washing, that is, the time that the soil should be exposed to the acidogenic leachate also depends on a number of factors, including
- the nature of the acidogenic leachate, for example the concentration of various reactants,
- the ratio between the amounts of leachate and soil, respectively,
- the temperature
- the geometry of the soil/leachate interface. This may be improved by stirring the mixture of soil and leachate.

In optimal conditions the exposure time between the soil and the leachate can be reduced to an hour or less.

In the following some data from an experiment including various types of leachate, water with a commercially available complex forming substance (EDTA) and distilled water will be discussed:
The different types of leachate were produced using food waste, fuel fraction, paper mill sludge and horse manure, respectively.

The main characteristics of the different types of organic waste used are shown in Table 2:

**Table 2 characteristics of the different types of organic waste used for producing leachate, including standard deviation for TS, VS, COD, indicated by ±**

| Waste | pH | EC | TS (%) | VS (%) |
|---|---|---|---|---|
| Food waste | 4.16 | 1.94 | 23.2±0.16 | 85.66±0.86 |
| Fuel fraction | 6.84 | 1.83 | 74.24±2.55 | 77.15±3.33 |
| Paper mill sludge | 7.55 | 0.83 | 32.46±1.68 | 66.42±0.99 |
| Horse manure | 8.12 | 0.91 | 27.26±1.18 | 47.52±1.18 |

- EC: electrical conductivity expressed as mS/cm. In this context, this is an indicator of the total salinity and the amount of dissolved ions in a sample.
- TS: Total solid, indicating the dry content of the materials
- VS: volatile solids, the burnable fractions in the materials, roughly indicating the organic content of the materials
- COD: Chemical Oxygen Demand is a measurement of the oxygen needed to oxidate all reduced compounds in the sample to water and carbon dioxide indicating the level of organic matter content of the wastes.

The food waste had already been through slow acidogenesis for one month in a refrigerator when the experiment was set up, which explains its low initial pH value.

Each of the types of waste was also analyzed for trace elements. Fuel fraction contained a certain amount of Zn, Pb and Cr while the other types of waste did not.

The experiment covered five different compositions of waste, A, B, C, D and E, as outlined in table 3:

**Table 3 the different types of waste used to obtain the different leachates.**

| | **Food waste** | **Fuel fraction** | **Paper mill sludge** | **Horse manure** | **Tap water** |
|---|---|---|---|---|---|
| **A** | 0.39 kg | | | | 3.33 kg |
| **B** | | 0.97 kg | | | 4.11 kg |
| **C** | | | 0.54 kg | | 3.33 kg |
| **D** | 0.16 kg | | 0.87 kg | | 6.75 kg |
| **E** | | 0.49 g | | 0.09 kg | 4.50 kg |

Table 4 illustrates the main characteristics of acidogenic leachate produced based on the combinations shown in Table 3, and also based on diluted food waste:

**Table 4 Characteristics of leachate**

| Waste origins | **pH** | **EC (mS/cm)** | **Fatty acid (M)** | **COD (g/l)** |
|---|---|---|---|---|
| **Food waste** | 3.59 | 2.34 | 0.12 | 213.33±10.4 |
| **Diluted food waste** | 4.57 | 1.33 | 0.02 | 50.5±7.47 |
| **Fuel fraction** | 5.82 | 5.3 | 0.01 | 14.25±1.77 |
| **Paper mill sludge** | 5.35 | 6.13 | 0.04 | 25.25±3.18 |
| **Paper mill sludge + food waste** | 5.48 | 5.71 | 0.04 | 43.33±17.02 |
| **Horse manure + fuel fraction** | 6.66 | 3.98 | 0.005 | 44.5±6.38 |

After acidogenesis for 3 months for food waste and 2 months for the rest, all the pH dropped, but not significantly. COD values declined in all the wastes, especially in food waste, fuel fraction and the combination of horse manure+ fuel fraction.

Table 5 illustrates eluate properties of the leachates based on A, B, C, D, E presented in Table 3 as well as diluted food waste leachate and water with EDTA and distilled water after Hg soil washing.

**Table 5 Eluate properties after Hg washing**

| Waste origins | **pH** | **EC (ms/cm)** | **COD (g/l)** |
|---|---|---|---|
| **Food waste** | 4.9 | 6.26 | 200±5 |
| **Diluted food waste (20% conc.)** | --- | --- | --- |
| **Fuel fraction** | 6.91 | 5.35 | 12.83±4.04 |
| **Paper mill sludge** | 5.94 | 7.87 | 22.17±0.76 |
| **Paper mill sludge + food waste** | 5.81 | 7.68 | 25±5.3 |
| **Horse manure + fuel fraction** | 7.15 | 5.27 | 19.38±4.42 |
| **Water with EDTA** | 6.53 | 2.17 | --- |
| **Distill water** | 7.32 | 1.6 | --- |

Table 6 illustrates eluate properties of the leachates based on A, B, C, D, E presented in Table 3 as well as diluted food waste leachate and water with EDTA and distilled water after Hg soil washing

**Table 6 Eluate properties after As washing**

| Waste origins | **pH** | **EC (ms/cm)** | **COD (g/l)** |
|---|---|---|---|
| **Food waste** | 6.43 | 8.44 | 87.5±23.8 |
| **Diluted food waste (20% conc.)** | 6.99 | 2.67 | 25.75±4.6 |
| **Fuel fraction** | 7.63 | 5.88 | 13.17±3.47 |
| **Paper mill sludge** | 6.11 | 7.92 | 19.75±2.6 |
| **Paper mill sludge** + **food waste** | 6.18 | 7.67 | 25.5±4.24 |
| **Horse manure + fuel fraction** | 7.7 | 5.23 | 11.88±4.42 |
| **Water with EDTA** | 7.49 | 2.23 | --- |
| **Distill water** | 8.51 | 1.2 | --- |

As can be seen from tables 5 and 6, after soil washing COD values decreased and pH values increased. Both changes were more pronounced for the washing of As contaminated soil than for Hg contaminated soil.

Table 7 illustrates the amount of washed-out elements after As soil washing for different types of leachate, and for distilled water.

**Table 7 Element concentration in the eluate in mg/l after As soil washing using leachate based on different types of organic waste**

| | **Bread** | **Vegetables** | **Mixed food waste** | **Distill water** |
|---|---|---|---|---|
| **Al** | 55.24 | 13.69 | 11.6 | 0.08 |
| **As** | 135.87 | 93.77 | 74.5 | 12.74 |
| **Ca** | 495.71 | 422.80 | 1920.0 | 51.14 |
| **Cd** | 0.83 | 0.44 | 0.3 | 0.05 |
| **Cr** | 7.26 | 2.43 | 1.2 | 0.06 |
| **Cu** | 14.80 | 6.23 | 4.5 | 0.11 |
| **Fe** | 83.55 | 15.89 | 3.3 | 0.18 |
| **K** | 223.51 | 457.94 | 749.2 | 8.48 |
| **Mg** | 89.35 | 71.91 | 290.8 | 6.27 |
| **Mn** | 42.77 | 31.03 | 31.1 | 0.72 |
| **Na** | 501.32 | 59.44 | 723.1 | 17.84 |
| **Zn** | 321.82 | 173.74 | 85.0 | 0.39 |
| **P** | 91.55 | 34.45 | 24.5 | 0.33 |
| **S** | 48.99 | 74.18 | 264.6 | 35.91 |

As in table 1, all the leachates were significantly more effective than distilled water. It should be noted that the differences between the different types of leachate may be due to different properties of the different types of organic waste; however, it could also be due to other factors, such as different waste/water ratios or to different leachate strength.

## Claims

1. Use of an acidogenic leachate for soil washing, said acidogenic leachate being obtainable by incomplete decomposition of organic waste under anaerobic conditions, said use including complex forming between fatty acid molecules in the acidogenic leachate and pollutants in the soil, resulting in a contaminated leachate.

2. Use of an acidogenic leachate according to claim 1, wherein the acidogenic leachate is obtainable by a process of decomposing organic matter in the presence of acid-producing bacteria, such as bacteria producing formic acid, acetic acid, propionic acid and lactic acid, and adding water to the decomposed organic matter to obtain the acidogenic leachate.

3. Use of an acidogenic leachate according to claim 2, wherein the process further comprises the separating the acidogenic leachate from residual solid matter.

4. Use of an acidogenic leachate according to any one of the preceding claims, wherein the decomposition of organic matter takes place in the presence of the soil to be washed.

5. A plant for soil washing comprising a washing container (2; 11; 21;71) for exposing contaminated soil to acidogenic leachate to produce washed soil and contaminated leachate, a washing container (2; 11; 21; 71) comprising acidogenic leachate obtained by the decomposition of organic waste under anaerobic conditions, said acidogenic leachate including fatty acid molecules that will form complexes with pollutants in the soil, liquid providing means (19; 65) arranged to provide such acidogenic leachate to the washing container (2; 11; 21;71) and first separating means (15; 37; 73, 78, 80) arranged to separate the contaminated acidogenic leachate from the washed soil.

6. A plant according to claim 5, wherein the washing container is arranged to hold contaminated soil and organic matter and to let the organic matter decompose under anaerobic conditions, wherein the liquid providing means is arranged to provide water to the mixture of soil and organic matter, whereby the acidogenic leachate can be produced by the decomposition of the organic matter.

7. A plant according to claim 5, further comprising a rinsing container (11; 31; 83) for exposing the washed soil to a rinsing liquid to remove contaminated acidogenic leachate from the washed soil to produce rinsed soil and contaminated rinsing liquid, and second separating means (15; 39; 85) arranged to separate the rinsed soil from the contaminated rinsing liquid.

8. A plant according to claim 5, wherein the rinsing container is the same container as the washing container.

9. A plant according to any one of the claims 5 - 7, wherein the first and/or second separation means includes a tap (15) for releasing the contaminated leachate and/or the contaminated rinsing liquid ans/or a mechanism, such as a transport line or a feed screw, for lifting the washed and/or rinsed soil from the washing and/or rinsing container to a next container.

10. A plant according to claim 6, wherein the rinsing container (11; 31; 83) is a second container separate from the washing container (2; 11; 21;71), the first separating means including first transporting means (37; 75, 76, 80, 81) for transporting washed soil from the washing container (2; 11; 21;71) to the rinsing container (11; 31; 83), the plant preferably comprising a soil container (35, 85) for receiving rinsed soil from the rinsing container (11; 31; 83).

11. A plant according to any one of the claims 5 - 10, wherein at least the washing container (2; 11; 21;71) and/or the rinsing container (11; 31; 83) is arranged to be transportable to enable soil washing in different locations.

12. A method for soil washing comprising the following steps:
a. Exposing contaminated soil to an acidogenic leachate for a first period of time of preferably 1 to 48 hours, to produce a suspension of leachate and washed soil, whereby fatty acid molecules in the acidogenic leachate form complexes with contaminants in the soil, resulting in a contaminated leachate
b. Separating the soil from the contaminated leachate to produce washed soil.

13. The method of claim 12, wherein the exposing of the soil to an acidogenic leachate takes place in parallel with the production of the acidogenic leachate by mixing organic material, soil to be washed and water before letting the organic material decompose in acidogenic conditions.

14. The method of claim 12, wherein the organic material is let to decompose in anaerobic conditions, preferably in the presence of acid producing bacteria such as bacteria producing lactic acid, formic acid, acetic acid or propionic acid,

15. A method according to claim 12, further comprising the step of
c. rinsing the washed soil using a rinsing liquid and/or vacuum filtering to produce clean soil.

16. A method according to claim 12 or 13, further comprising the step of
d. purifying the contaminated leachate by precipitating contaminants such as metal cations the in contaminated leachate, e.g. by adding a substance such as a sulfate to the contaminated leachate.

17. A method according to any one of the claims 12 - 16, further comprising the step, preceding method step a, of producing the acidogenic leachate by decomposing organic material in an anaerobic environment.

18. A method according to any one of the claims 12 - 17, further comprising the step of transporting the washing and/or rinsing container to the site where the contaminated soil is located, wherein the method is performed near the location of the contaminated soil.

## Patentansprüche

1. Verwendung eines acidogenen Sickerwassers für eine Bodenwäsche, wobei das acidogene Sickerwasser durch unvollständige Zersetzung von organischem Abfall unter anaeroben Bedingungen erhältlich ist, wobei die Verwendung ein komplexes Ausbilden zwischen Fettsäuremolekülen in dem acidogenen Sickerwasser und Schadstoffen in dem Boden einschließt, was zu einem kontaminierten Sickerwasser führt.

2. Verwendung eines acidogenen Sickerwassers nach Anspruch 1, wobei das acidogene Sickerwasser durch einen Vorgang der Zersetzung von organischen Stoffen in Gegenwart von säureerzeugenden Bakterien, wie Bakterien, die Ameisensäure, Essigsäure, Propionsäure und Milchsäure erzeugen, und Hinzufügen von Wasser zu den zersetzten organischen Stoffen, um das acidogene Sickerwasser zu erhalten, erhältlich ist.

3. Verwendung eines acidogenen Sickerwassers nach Anspruch 2, wobei der Vorgang ferner das Trennen des acidogenen Sickerwassers von Restfeststoff umfasst.

4. Verwendung eines acidogenen Sickerwassers nach einem der vorstehenden Ansprüche, wobei die Zersetzung von organischen Stoffen in Gegenwart des zu waschenden Bodens erfolgt.

5. Anlage für eine Bodenwäsche, umfassend einen Waschbehälter (2; 11; 21;71) zum Aussetzen von kontaminiertem Boden gegenüber acidogenem Sickerwasser, um gewaschenen Boden und kontaminiertes Sickerwasser zu erzeugen, einen Waschbehälter (2; 11; 21; 71), umfassend acidogenes Sickerwasser, das durch die Zersetzung von organischem Abfall unter anaeroben Bedingungen erhalten wird, wobei das acidogene Sickerwasser Fettsäuremoleküle einschließt, die Komplexe mit Schadstoffen in dem Boden ausbilden, wobei ein Flüssigkeitsbereitstellungsmittel (19; 65) angeordnet ist, um ein solches acidogenes Sickerwasser an den Waschbehälter (2; 11; 21; 71) und ein erstes Trennmitteln (15; 37; 73, 78, 80), das angeordnet ist, um das kontaminierte acidogene Sickerwasser von dem gewaschenen Boden zu trennen, bereitzustellen.

6. Anlage nach Anspruch 5, wobei der Waschbehälter angeordnet ist, um kontaminierten Boden und organische Stoffe zu halten und die organischen Stoffe unter anaeroben Bedingungen zersetzen zu lassen, wobei das Flüssigkeitsbereitstellungsmittel angeordnet ist, um der Mischung aus Boden und organischen Stoffen Wasser bereitzustellen, wodurch das acidogene Sickerwasser durch die Zersetzung der organischen Stoffe erzeugt werden kann.

7. Anlage nach Anspruch 5, ferner umfassend einen Spülbehälter (11; 31; 83), zum Aussetzen des gewaschenen Bodens gegenüber einer Spülflüssigkeit, um kontaminiertes acidogenes Sickerwasser aus dem gewaschenen Boden zu entfernen, um gespülten Boden und kontaminierte Spülflüssigkeit zu erzeugen, und zweite Trennmittel (15; 39; 85), die angeordnet sind, um den gewaschenen Boden von der kontaminierten Spülflüssigkeit zu trennen.

8. Anlage nach Anspruch 5, wobei der Spülbehälter derselbe Behälter wie der Waschbehälter ist.

9. Anlage nach einem der Ansprüche 5 bis 7, wobei das erste und/oder das zweite Trennmittel einen Hahn (15) zum Ausscheiden des kontaminierten Sickerwassers und/oder der kontaminierten Spülflüssigkeit und/oder einen Mechanismus, wie eine Transportleitung oder eine Förderschnecke, zum Anheben des gewaschenen und/oder gespülten Bodens aus dem Wasch- und/oder Spülbehälter in einen nächsten Behälter einschließt.

10. Anlage nach Anspruch 6, wobei der Spülbehälter (11; 31; 83) ein zweiter Behälter ist, der von dem Waschbehälter (2; 11; 21; 71) getrennt ist, wobei das erste Trennmittel ein erstes Transportmittel (37; 75, 76, 80, 81) zum Transportieren von gewaschenem Boden von dem Waschbehälter (2; 11; 21; 71) zu dem Spülbehälter (11; 31; 83) einschließt, die Anlage vorzugsweise umfassend einen Bodenbehälter (35, 85) zum Aufnehmen von gespültem Boden aus dem Spülbehälter (11; 31; 83).

11. Anlage nach einem der Ansprüche 5 bis 10, wobei mindestens der Waschbehälter (2; 11; 21; 71) und/oder der Spülbehälter (11; 31; 83) angeordnet ist, um transportierbar zu sein, um eine Bodenwaschung an unterschiedlichen Orten zu ermöglichen.

12. Verfahren zum Bodenwaschen, umfassend die folgenden Schritte:
a. Aussetzen von kontaminiertem Boden gegenüber einem acidogenen Sickerwasser für einen ersten Zeitraum von vorzugsweise 1 bis 48 Stunden, um eine Suspension von Sickerwasser und gewaschenem Boden zu erzeugen, wobei Fettsäuremoleküle in dem acidogenen Sickerwasser Komplexe mit Verunreinigungen in dem Boden ausbilden, was zu einem kontaminierten Sickerwasser führt
b. Trennen des Bodens von dem kontaminierten Sickerwasser, um gewaschenen Boden zu erzeugen.

13. Verfahren nach Anspruch 12, wobei das Aussetzen des Bodens gegenüber einem acidogenen Sickerwasser parallel zu der Erzeugung des acidogenen Sickerwassers erfolgt, durch Mischen von organischem Material, zu waschendem Boden und Wasser vor dem Zersetzen lassen des organischen Materials in acidogenen Bedingungen.

14. Verfahren nach Anspruch 12, wobei man das organische Material in anaeroben Bedingungen zersetzen lässt, vorzugsweise in Gegenwart von säureerzeugenden Bakterien, wie Bakterien, die Milchsäure, Ameisensäure, Essigsäure oder Propionsäure erzeugen,

15. Verfahren nach Anspruch 12, ferner umfassend die Schritte
c. Spülen des gewaschenen Bodens unter Verwendung einer Spülflüssigkeit und/oder Vakuumfilterung, um sauberen Boden zu erzeugen.

16. Verfahren nach Anspruch 12 oder 13, ferner umfassend den Schritt
d. Reinigen des kontaminierten Sickerwassers durch Abscheiden von Verunreinigungen wie Metallkationen in kontaminiertem Sickerwasser, z. B. durch Hinzufügen einer Substanz wie ein Sulfat zu dem kontaminierten Sickerwasser.

17. Verfahren nach einem der Ansprüche 12 bis 16, ferner umfassend den Schritt, der dem Verfahrensschritt a vorangeht, des Erzeugens des acidogenem Sickerwasser durch Zersetzen von organischem Material in einer anaeroben Umgebung.

18. Verfahren nach einem der Ansprüche 12 bis 17, ferner umfassend den Schritt des Transportierens des Wasch- und/oder Spülbehälters zu dem Ort, an dem sich der kontaminierte Boden befindet, wobei das Verfahren in der Nähe des Orts des kontaminierten Bodens durchgeführt wird.

## Revendications

1. Utilisation d'un lixiviat acidogène destinée au lavage de sol, ledit lixiviat acidogène pouvant être obtenu par décomposition incomplète de déchets organiques dans des conditions anaérobies, ladite utilisation comportant une formation de complexe entre des molécules d'acide gras dans le lixiviat acidogène et des polluants dans le sol, résultant en un lixiviat contaminé.

2. Utilisation d'un lixiviat acidogène selon la revendication 1, dans laquelle le lixiviat acidogène peut être obtenu par un processus de décomposition de matière organique en présence de bactéries productrices d'acide, telles que des bactéries produisant de l'acide formique, de l'acide acétique, de l'acide propionique et de l'acide lactique, et l'ajout d'eau à la matière organique décomposée pour obtenir le lixiviat acidogène.

3. Utilisation d'un lixiviat acidogène selon la revendication 2, dans laquelle le procédé comprend en outre la séparation du lixiviat acidogène de la matière solide résiduelle.

4. Utilisation d'un lixiviat acidogène selon l'une quelconque des revendications précédentes, dans laquelle la décomposition de la matière organique a lieu en présence du sol à laver.

5. Installation destinée au lavage de sol comprenant un récipient de lavage (2 ; 11 ; 21 ;71) pour exposer un sol contaminé à un lixiviat acidogène pour produire un sol lavé et un lixiviat contaminé, un récipient de lavage (2 ; 11 ; 21 ; 71) comprenant un lixiviat acidogène obtenu par la décomposition de déchet organique dans des conditions anaérobies, ledit lixiviat acidogène comportant des molécules d'acide gras qui formeront des complexes avec des polluants dans le sol, un moyen de fourniture de liquide (19 ; 65) agencé pour fournir un tel lixiviat acidogène au récipient de lavage (2 ; 11 ; 21 ;71) et un premier moyen de séparation (15 ; 37 ; 73, 78, 80) agencé pour séparer le lixiviat acidogène contaminé provenant du sol lavé.

6. Installation selon la revendication 5, dans laquelle le récipient de lavage est agencé pour contenir du sol contaminé et de la matière organique et pour laisser la matières organique se décomposer dans des conditions anaérobies, dans laquelle le moyen de fourniture de liquide est agencé pour fournir de l'eau au mélange de sol et de matière organique, moyennant quoi le lixiviat acidogène peut être produit par la décomposition de la matière organique.

7. Installation selon la revendication 5, comprenant en outre un récipient de rinçage (11 ; 31 ; 83) pour exposer le sol lavé à un liquide de rinçage pour éliminer le lixiviat acidogène contaminé provenant de la terre lavée pour produire un sol rincé et un liquide de rinçage contaminé, et un second moyen de séparation (15 ; 39 ; 85) agencé pour séparer le sol rincé du liquide de rinçage contaminé.

8. Installation selon la revendication 5, dans laquelle le récipient de rinçage est le même récipient que le récipient de lavage.

9. Installation selon l'une quelconque des revendications 5 à 7, dans laquelle le premier et/ou le second moyen de séparation comportent un robinet (15) pour libérer le lixiviat contaminé et/ou le liquide de rinçage contaminé et/ou un mécanisme, tel qu'une ligne de transport ou une vis d'alimentation, pour lever le sol lavé et/ou rincé du récipient de lavage et/ou de rinçage vers un récipient suivant.

10. Installation selon la revendication 6, dans laquelle le récipient de rinçage (11 ; 31 ; 83) est un second récipient séparé du récipient de lavage (2 ; 11 ; 21 ;71), le premier moyen de séparation comportant un premier moyen de transport (37 ; 75, 76, 80, 81) pour transporter un sol lavé du récipient de lavage (2 ; 11 ; 21 ;71) vers le récipient de rinçage (11 ; 31 ; 83), l'installation comprenant de préférence un récipient de sol (35, 85) pour recevoir un sol rincé à partir du récipient de rinçage (11 ; 31 ; 83).

11. Installation selon l'une quelconque des revendications 5 à 10, dans laquelle au moins le récipient de lavage (2 ; 11 ; 21 ;71) et/ou le récipient de rinçage (11 ; 31 ; 83) sont agencés pour pouvoir être transportés pour permettre un lavage de sol dans différents emplacements.

12. Procédé de lavage de sol comprenant les étapes suivantes :
a. exposer un sol contaminé à un lixiviat acidogène pendant une première période de temps de préférence de 1 à 48 heures, pour produire une suspension de lixiviat et de sol lavé, moyennant quoi des molécules d'acide gras dans le lixiviat acidogène forment des complexes avec des contaminants dans le sol, résultant en un lixiviat contaminé
b. séparer la terre du lixiviat contaminé pour produire un sol lavé.

13. Procédé selon la revendication 12, dans lequel l'exposition du sol à un lixiviat acidogène a lieu parallèlement à la production du lixiviat acidogène en mélangeant le matériau organique, le sol à laver et l'eau avant de laisser le matériau organique se décomposer dans des conditions acidogènes.

14. Procédé selon la revendication 12, dans lequel le matériau organique est laissé à se décomposer dans des conditions anaérobies, de préférence en présence de bactéries productrices d'acide telles que des bactéries produisant de l'acide lactique, de l'acide formique, de l'acide acétique ou de l'acide propionique,

15. Procédé selon la revendication 12, comprenant en outre l'étape consistant à
c. rincer le sol lavé à l'aide d'un liquide de rinçage et/ou d'un filtrage sous vide pour produire un sol propre.

16. Procédé selon la revendication 12 ou 13, comprenant en outre l'étape consistant à
d. purifier le lixiviat contaminé en précipitant des contaminants tels que des cations métalliques dans le lixiviat contaminé, par exemple en ajoutant une substance telle qu'un sulfate au lixiviat contaminé.

17. Procédé selon l'une quelconque des revendications 12 à 16, comprenant en outre l'étape, précédent le procédé de l'étape a, consistant à produire du lixiviat acidogène en décomposant un matériau organique dans un environnement anaérobie.

18. Procédé selon l'une quelconque des revendications 12 à 17, comprenant en outre l'étape consistant à transporter le récipient de lavage et/ou de rinçage vers le site où se situe le sol contaminé, dans lequel le procédé est effectué près de l'emplacement du sol contaminé.
